# EUROPEAN PATENT SPECIFICATION

(11) **EP 2 314 031 B1**
(45) Date of publication and mention of the grant of the patent: **25.01.2012**
(21) Application number: 08775141.8
(22) Date of filing: 16.07.2008
(51) Int. Cl.: H04L 12/58, H04M 1/00, G08B 13/14, H04N 7/14, H04L 12/28

(54) **SYSTEM FOR DELIVERING AND PRESENTING A MESSAGE WITHIN A NETWORK**
SYSTEM ZUM ABLIEFERN UND PRÄSENTIEREN EINER NACHRICHT IN EINEM NETZWERK
SYSTÈME DE DISTRIBUTION ET DE PRÉSENTATION D'UN MESSAGE DANS UN RÉSEAU

(43) Date of publication of application: 27.04.2011
(73) Proprietor: FUNDACION TECNALIA RESEARCH & INNOVATION, 48160 Derio Vizcaya (ES)
(72) Inventor: FIMBEL, Eric, E-20009 Donosti-san Sebastián (guipuzcoa) (ES); KELLER, Thierry, E-20009 Donosti-san Sebastián (guipuzcoa) (ES)
(74) Representative: Carpintero Lopez, Francisco
(86) International application number: PCT/EP2008/059320
(87) International publication number: WO 2010/006647

(56) References cited:
- GB-A- 2 404 480
- US-A1- 2002 163 572
- US-B1- 6 618 074

## Description

### Field of the invention

The present invention is related to the transmission and display of digital information, more particularly messages, between devices forming part of a network.

### Background of the invention

At present, there are several systems that can deliver information in the form of a message to a user. However, when the fact of delivering a message is contemplated, depending on the target of said message, one or more of the following considerations should be taken into account:
1- The location where the information is presented determines the amount of time and of effort required from the user. For instance, when information is presented on a local display, e.g. domestic alarm systems, electronic thermostats, the persons typically have to walk across the place in order to get the messages. When information is presented on a mobile device like a cell phone or a personal digital assistant, PDA, the persons typically have to retrieve the device from a pocket and/or a purse.
2- The alert signal that accompanies a message determines the extent to which a person is aware of a new message without effort and delay, as well as his/her state of mind when the message is decoded. For instance, the appearance of the message on a screen is a basic alert signal, but it only works if the person is looking at the screen. An alarm sound is efficient for most of the people, obviously not for deaf people, but it may be startling and/or stressing.
3- The interaction with the messages is an important determinant of the effort required to use the system. If the user has to get close to a device, press small keys that cannot be seen clearly or reached precisely, or if the interactions are long sequences of commands and/or dialog boxes, the effort will be important and the efficiency will be low.
4- The content and the presentation of a message are important determinants of the amount of time and effort required for its understanding. A message that contains a large amount of textual information may be effortful to read and difficult to understand at first glance. Conversely static icons or animations can be generally understood at first glance but they may require complementary textual information (Wiedenbeck, S., Behaviour & Information Technology, 18(2), 68-82, 1999). Videos are adequate to present activities or events, but not for static information.
5- The satisfaction of the user may be affected by a series of factors: negative perception of the system, e.g., *a priori* aversion to -or fear of- technology, negative impacts on the daily life (like unpleasant aesthetics, disruptive or unpleasant alert messages), lack of trustability (e.g., caused by false alarms, or misunderstood messages).
6- Perceptual losses, like those due to age, may difficult the reading of texts, the detection of alarm sounds, the correct perception of images with fine level of details. Finally, people that have difficulties to walk are unlikely to get closer to a display to read a warning message. Also motor limitations and related diseases (e.g., arthritis) may difficult the use of a keyboard.
7- The negative impact of all the foregoing factors may be emphasized for elderly customers. Elderly people may have perceptual and motor losses. They may present technological apprehension (Czaja, S.J., & al. Psychol Aging, 21(2), 333-352, 2006), be unfamiliar with electronic display devices (monitors, LCD displays), unfamiliar with the current style of information presentation (e.g., graphical interfaces) and with the vocabulary used in textual information (e.g., understanding a digital thermostat is not always easy).

Patent document US-2006/0129943-A1 describes a wireless device and a method for viewing short messages on such device. The device includes a viewing screen, a processor, a memory device and a message software interface module to store the messages and to select the most adequate according to some criteria. However, messages are only displayed as text, and the amount of information and the complexity of the message are limited by the type of display. In addition, the problems of where the information is physically displayed, how the user is alerted and how the user interacts with the message are not tackled in this invention.

Patent document US-2002/0111177-A1 describes a wireless system that allows displaying sequences of icons on a terminal equipped with a display. It defines a data structure to efficiently transmit display instructions. However, the amount of information and the complexity of the message that can be transmitted by means of sequences of icons are limited. In addition, animations are not necessarily the best way to transmit some types of information. Text alone, or text plus static images may be more efficient for some types of messages (Wiedenbeck, S., Behaviour & Information Technology, 18(2), 68-82, 1999).

Patent document JP 2006-324940 discloses a communication apparatus with an image display function, which comprises a voice analysis part for analyzing a voice message and calculating voice feature information, an animation data storage part for storing animation data which are the collection of a series of still images selected by a transmitter according to the voice message, and an animation generation part for generating animation while synchronizing the stored voice feature information and the animation data corresponding to the voice data with each other. This invention focuses on voice, and it may allow transmitting messages of arbitrary length and/or complexity. However, animation plus voice is likely to be perceived as an animated assistant, and the problems related to stress and/or rejection may occur in this case.

GB-2404480 discloses an intrusion detection system which includes a sensor array. The array has one or more intrusion detector nodes and an array processor. Each node has at least one discrete sensor and may also include a node processor. The detection zone formed is defined by a plane that extends transversely form a longitudinal axis of the sensor node. Each node processor processes the signals from the sensors of that node when an intruder enters the node's detection zone. The system is intended for installation on narrow objects that surround a perimeter such as on a wall, post, roof-edge etc.

US 2002/163572 discloses a method of establishing a communications link using automatic sensing of a computer user's presence and activity state to record user attributes in a form accessible to other computers in a communications network.

In summary, none of the foregoing documents tackles the problems of where the information is physically displayed in the most appropriate environment of the user; nor are other problems faced, such as how the user is alerted, how the user interacts with the messages, and how to prevent and/or minimize aversive reactions. That is, the dissociation between "moving support" and message is absent from these documents, so as to deliver the messages where the users are likely to be.

### Summary of the invention

The invention refers to a system for delivering and presenting a message to a user according to claim 1. Preferred embodiments of the system are defined in the dependent claims.

The present invention aims at delivering a message to a target user, where such user is most likely to be, by means of displaying such message in a device and in the way which suits the most that target user. In order to do so, the system of the present invention comprises a plurality of display devices equipped with presence detection sensors and preferably with local environmental sensors, all connected in a network and some mobile autonomous applications which run on said display devices and deliver the messages where the users are likely to be according to the state of the presence detection sensors.

The invention refers to a system for delivering and presenting a message to a user within a network, the system comprising:
- a set of display devices connected to said network, and distributed along different locations within the scope of reach of said network;
- a set of presence detection sensors also connected to such network, directly or through any of said display devices, configured to provide a sensor state which is related to the presence of users within their scope of reach.

According to a first aspect of the invention:
- each of the display devices, by means of an internal processor, is configured to periodically sense the sensor states of a subset of said presence detection sensors to which the display device is directly connected or to which it has been assigned monitoring responsibility and whose scope of reach covers a predetermined neighbour area around said display device; and
- each of the display devices is configured to compute a presence probability estimate which is obtained as a pre-established function of said sensor states, and whose value covariates with the probability that a user is in said neighbour area of the display device;
- each display device is configured to display zero, one or several messages through means for presenting information;
- each message that is to be displayed in the system is presented in at least one display device whose *presence probability* estimate is above a predetermined threshold, through its means for presenting information.

Thus, the display devices and the presence detection sensors are connected by a network, typically a local wireless network, but it can be any network or combination of networks. As indicated, the sensors are either connected to the display devices -preferably by means of input/output ports- or directly to the network.

Preferably, each display device has memory means and is configured to:
- store a variable number of messages in said memory means,
- said messages being received by means of the network or being generated by the display device itself.

According to a preferred embodiment, each display device whose presence probability estimate is below a predetermined threshold, is configured to transfer any message that is to be displayed to any display devices whose presence probability estimate is above a predetermined threshold by means of the network.

Preferably each display device is configured to receive commands by means of the network and to display and/or hide messages in response to said commands.

One or more of the display devices preferably has a real time clock, and is configured to exchange time related information with other display devices, and the display devices are configured to display and/or hide messages according to time-related information proceeding from their real-time clock or received from other display devices by means of the network.

The system preferably further comprises a set of local environmental sensors connected to said network, directly or through any of said display devices, wherein:
- said local environmental sensors are distributed among different locations within the scope of reach of such network;
- one or more of said display devices are configured to sense the status of a subset of said local environmental sensors, composed of those to which they are connected directly and those for which they have been assigned monitoring responsibility;
- said display devices are configured to display and/or hide one or more messages according to the status of said local environmental sensors;
- said display devices are configured to send commands to other display devices to the effect of displaying and/or hiding messages.

Each of the display devices preferably has one or more applications stored in said memory means, each application including at least:
- one message to be presented to the user,
- an *activation condition* which preferably is a digital sequence that can be computed to produce a value that depends on the status of a first predetermined subset of said local environmental sensors and on time-related information;
- a *satisfaction condition* which preferably is a digital sequence that can be computed to produce a value that depends on said display device, on time-related information and on the *presence probability estimate* of said display device, in such a way that said value increases with the *presence probability estimate.*

And wherein each of the display devices is preferably configured:
- to constantly monitor said one or more applications stored in its memory; and
- in response to learning that the *activation condition* of any application is true, the display device is configured to launch said application making the corresponding application active; and

- to constantly monitor the arrival of an external command that requires a specific application, and upon detection of such an event, launch the application indicated by the event making it active; and
- to constantly broadcast a list of its active applications on the network; and
- in response to having one or more applications active, the display device is configured to evaluate the *satisfaction condition* of each active application, and:
   - if the value of the *satisfaction condition* is over a pre-established threshold, the display device is configured to present the message of the active application to the user through its means for presenting information; and,
   - otherwise, the display device is configured to check the satisfaction condition of the application on the other display devices as broadcasted by them, and to transfer said active application to one or several display devices whose *satisfaction condition* has a value over said pre-established threshold; and
   - upon receipt of said active application, said display device having the application whose *satisfaction condition* has a value over said pre-established threshold is configured to present said active message to the user through its means for presenting information.

Then, with the system as defined in the foregoing, a message which is to be delivered to a user, will be presented to that target user where he/she is likely to be, by means of one of the display devices connected within a network where that user is. The message "travels" or "jumps" between display devices to reach the most adequate devices (it is possible to have a redundancy of messages, i.e., several displays at the same time) where it is displayed to the user, said "most adequate devices" being the display devices where it is likely that somebody is present (according to the information provided by the presence detection sensors), and which preferably corresponds to the most adequate locations given the nature of the message itself. So the messages "go" to the persons, i.e. the messages travel towards the display devices where human presence is detected, not the other way.

The display devices may be decorative wall-mounted monitors placed in different rooms, devices that the person is used to watch, like a TV-set, devices that the person can place anywhere, e.g., on a table, on the door of a kitchen equipment, and/or mobile devices.

The display devices can be equipped with a speech and/or sound entry device capable of interpreting vocal commands or sounds like hand clapping. This allows the user to interact with the system without actually getting close to the display device. And/or they can be equipped with a microphone, or more generally with a sound capture device capable of detecting specific sounds, e.g., produced by a person, by means of sound processing algorithms.

The display devices can be equipped with a camera capable of interpreting movements as entry commands by means of image processing algorithms. And/or they can be equipped with a camera, or more generally an optical device capable of capturing images of the room and of detecting movements by means of image processing algorithms.

Said messages are preferably displayed in a window, which window is preferably configured to move in the means of presenting information of the display device in a pseudo-random manner, not distorting the aspect of the message itself, i.e. its proportions and orientation. This way, the position of the message seems unpredictable to the user, which forces the attention of the user and avoids habituation. Unpredictable movement is not repetitive therefore the attention response is not decreased after multiple presentations (Schneider, W. & Shiffrin, R. M. Psychological Review, 84, 1-66, 1977). However, with a relatively slow motion, the message remains understandable because the brain can maintain a steady visual image of the message thanks to the compensation mechanisms of the eye and the head (Kandel, E.R., et al. "Principles of Neural Science - 4th edition". Mc Graw Hill, 2000). In order to obtain that pseudo-random or unpredictable movement of the message in the means of presenting information, said pseudo-random algorithm can be for instance based on Boltzmann's probability distribution (Mac Keown, K. P. "Stochastic Simulation in Physics". Springer, 1997).

So, the position of the window is preferably determined by means of a random decision algorithm.

Said random decision algorithm can be executed periodically and configured to determine randomly a new position *np* for said window each time it is executed, to compute a probability decision function *P* of moving towards *np* and to decide randomly to move to position *np* with said probability decision function *P* or to remain in the current position *cp* with a probability *1-P* and

the probability decision function *P* depends on one or several of the following factors: the amplitude and direction of the movement required to pass from the current position *cp* to the new position *np*, the K1 most recent positions of the window, the K2 most recent directions of movement of the window, the K3 most recent distances between the window and a target position *tp* to display its message, the time during which the window has been visible, and the position of other windows, K1, K2 and K3 being natural numbers.

Also, said random decision algorithm can be executed periodically determining a new position *np* for said window each time it is executed, as follows:
- determine a new position *np,* randomly within a neighborhood *N* of the current position *cp* of the message and decide randomly to move to *np* according to the probability decision function *P* or to remain at position cp with probability decision function *1-P*, the probability decision function P being a real function in the interval [0, 1] defined on neighborhood *N*
- where said neighborhood *N* is composed of the positions that are at a distance of at most *D* pixels from the current position *cp*, *D* being an adjustable parameter; and -
- said probability decision function *P* being higher for positions that are closer from a given target position *tp* than the current position *cp* and lower for positions that are farther from *tp* than *cp*, said target position *tp* being a parameter that can be changed at every moment.
- said probability decision function P being higher for positions that do not belong to the list of the K1 most recent positions of the window and lower for positions that belong to said list
- said probability decision function P being higher for positions that are in a the average direction computed from the K2 most recent directions and lower for positions that are in the opposite of said average direction,
Said probability decision function *P* is based on Boltzmann's probability distribution, and
- *P*(*x*) is 1 for positions of *x* that are closer than said current position cp from said target position *tp*, and
- *P*(*x*) = *a**exp(-Δ*E*/*kT*), where Δ*E* is a function - referred as '*cost function*' and a, and k are arbitrary non-negative constants adjusted so that *P* is normalized within a predetermined interval of values on said neighborhood *N*, and
- Δ*E* increases with the variation of distance to the target position d(*cp*,*tp*)-d(*cp*,*tp*) where d(x,y) is the distance between two points x and y of the display device, and
- Δ*E* increases when *np* belongs to the list of the *K1* most recent positions, and
- Δ*E* increases with the change of direction |Φ(cp, np)- Φave| that would correspond to the move to new position np, where Φ(x,y) is the direction of the movement between points *x* and *y* of the display devices and Φave is the average of the K2 most recent directions and
- *T* is an adjustable parameter - referred to as '*logical temperature*' *-* which is preferably a function of, among others, the K3 most recent distances between the current position *cp* and the target position *tp*, the time during which the window has been visible and the distance between *cp* and the other messages currently displayed by said display device,

The message can be delivered in several forms, e.g., static image, animation, written and spoken text, audio and video.

Preferably the first visible form of the message is a static image or an animation that transmits a clear overview of the content. The other forms (texts, multimedia) may be accessible on demand, in order to deliver information of arbitrary length and/or complexity, adapted to the user and the context: e.g., spoken messages when the user has poor sight or stays far from the display, or written texts when environment is noisy.

The means of presenting information of the display device preferably has a number of pre-assigned zones where the message can be presented to the user. And the message can be successively presented to the user in one or another of the pre-assigned zones, according to a status of said message, i.e., the message can "travel" or move within the same means of presenting information (e.g. display), in order to catch the attention of the user without requiring alarm sounds or stressing attention signals. Thus, according to this preferred embodiment, the message moves towards a location that is meaningful and predictable for the user, but moves towards this location in an unpredictable (pseudo-random) manner, in order to catch and maintain attention.

Said pre-assigned zones can be as follows:
- a start zone, where the message is presented upon arrival or when it is created;
- a stage zone, where the message is presented until it is acknowledged, becomes pointless or must be transferred to another display device;
- a backstage, where the message is presented when acknowledged or when it becomes pointless, as determined by its *activation condition*; and,
- a transfer zone, where the message is presented when it is to be transferred to another display device as determined by its *satisfaction condition.*

The message can be displayed in different sizes in each of said pre-assigned zones. So, a message that must be read and is in the stage zone will have a major size than a message that has been acknowledged and is in the backstage.

So the message to be presented to the user can be information collected from any sensor in the system (sensor-based events), but it can also be information such as, reminders from a personal agenda (clock-based events) or information from external sources, e.g., weather information or important news.

These sensors in the system preferably are devices that provide digital and/or analogue parameters that represent in real-time the domestic environment and can transmit this parameter at any moment, like the sensors used in security system or smart buildings, e.g., intrusion sensors, door or window opening sensors, movement detectors, light detectors, heat or inundation detectors, microphones, video cameras.

The display device preferably further includes an interaction means or a minimal entry of command, through which the user can interact with the display device, and for example, acknowledge receipt of a message. So, the user should be able to interact directly with the messages (principle of direct interaction; Kay, A., Goldberg, A. Computer, 10, 31-41, 1977) by means of a single interaction mechanism, like a touch on the screen. Or it can be done remotely, for instance, by means of speech or sound commands, or by means of a key press on a remote control device, or by means of a movement done with the remote control device (so that the user does not have to move towards the display). Successive interactions should change cyclically the state of the message, in order to access the different forms of delivery and/or to acknowledge the message.

In fact, the actions allowed by the system can be: to acknowledge a message, to get it in a different modality (animation, written text, spoken text, etc.), to drag it into one of the pre-assigned zones, or it can be some other action related to one or more actuators (like electromagnetic door locks, electric switches, electric graduators, electronic thermostats...) that preferably form part of the system (e.g. lock/unlock entry door or toggle lights).

The main alert signal preferably is the appearance of the message itself. The main reason of this choice is that the presence of a moving object in the visual field is likely to catch attention, because the visual system is equipped to detect and track movement (dorsal visual pathway, Kandel, E.R., et al. "Principles of Neural Science - 4th edition". Mc Graw Hill, 2000). Disruptive alert signals, like voice calls, sounds, flashing lights may be used on a case-by-case basis.

The system preferably further includes a network server, which is configured to maintain statistics on traffic and actions of the user, in order to analyze both the behaviour of the system and the behaviour of the user, for instance, for automatic detection of abnormal user behaviour (actigraphy, monitoring of habits, etc).

### Brief description of the drawings

To complete the description and in order to provide for a better understanding of the invention, a set of drawings is provided. Said drawings form an integral part of the description and illustrate preferred embodiments of the invention, which should not be interpreted as restricting the scope of the invention, but just as examples of how the invention can be embodied. The drawings comprise the following figures:
Figure 1 schematically shows the main elements of the system of the invention.
Figure 2 shows the creation of a message and a possible path followed through different devices within the system of the invention.
Figure 3 shows a typical layout of the screen of a device forming part of the system of the invention.
Figure 4 shows an example of sequence of states of a message under the effect of consecutive interactions.
Figure 5 shows a flowchart of the main loop carried out by the display devices.
Figure 6 is a flowchart showing the activation of a message.
Figure 7 is a flowchart showing the end of a message.
Figure 8 is a flowchart showing the transfer of a message.
Figures 9 and 10 are flowcharts showing the movement of a message in a display device if the *satisfaction condition* is over a pre-established threshold or not, respectively.

### Detailed description of the preferred embodiments

Reference will now be made in detail to a preferred embodiment of the message delivery system of the present invention.

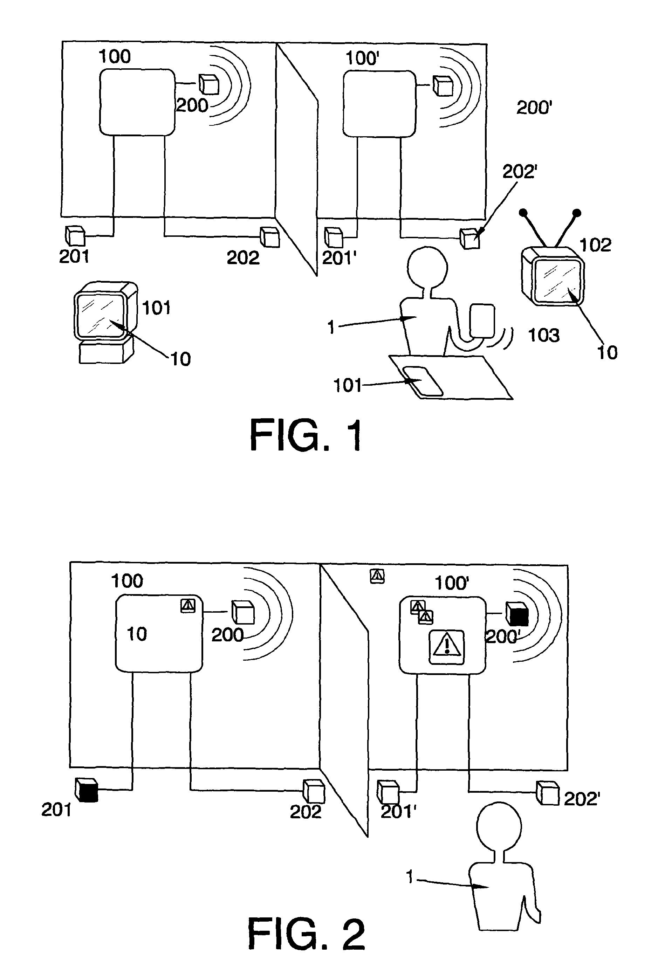

Figure 1 shows a synoptic of a possible embodiment of the system of the invention, installed in a house of a user 1, where a wireless local network has been installed.

The system includes a series of display devices -which in the preferred embodiment are also referred to as 'infospaces'- connected to such network, and distributed along different rooms within the house. In the embodiment shown in figure 1 such display devices are:
- a series of wall-mounted monitors 100, 100', distributed around the house, e.g. one wall mounted-monitor in each room;
- a personal computer 101, in one or more of the rooms;
- an equipped TV-set 102;
- a mobile device 103, (e.g., PDA, cell phone or wrist watch), which in the embodiment shown in figure 1 also includes a motion sensor, e.g., accelerometer; and
- an "electronic post-it" 104 or mobile autonomous display.

The wall-mounted monitors are capable of displaying paintings, photos or decorative pictures when there are no messages.

These "electronic post-its" are flat mobile devices that can work without wired connections, have an autonomous energy supply, and that can be fixed on a metallic surface (e.g., by means of magnets), or can be placed on tables or flat surfaces (e.g., by means of a removable support), or can be hung at a vertical surface (e.g., by means of orifices in which nails and/or hooks are inserted).

As indicated, all of these display devices are connected to the wireless local network, and one of the display devices acts as a network server. A display device can be dynamically connected to another network, so it can transport information between different networks.

In the case shown in figure 2, the leftmost wall-mounted monitor 100 has been assigned to work as a network server in this case, for which purpose it also has a WiFi router and runs a server application in parallel. But the server could also be possibly implemented in any other device, for instance, in a laptop, be it working as a display device (as it would be the case of a laptop, which includes a display), or be it working as a network server with no additional monitoring functionalities (as it would be the case of a "processing box" without display means).

These display devices that are part of the system include:
- a way of presenting information to the target user, either by:
   - visual means, such as a display, like an LCD screen 10,
   - audio means, such as a loudspeaker,
   - tactual means, such as a Braille display,
   so that the message can be delivered to any target user, independently of he/she being deaf, blind or physically impaired;
- an interaction mechanism or minimal entry of command, like a touch screen, a button or a key, a stylus or a mouse, an external entry of commands like a decoder for a remote control;
- a processor;
- input/output ports;
- a real time clock;
- a network connection; and,
- supply means, like a plug to be connected externally or batteries.

These display devices also include one or more software applications (microprograms) -which in the preferred embodiments are also referred to as 'infodgets'- that display a message under different modalities in a window, and are composed of: a program or micro-program, the data of a message, and an *activation condition* and a *satisfaction condition*.

The system also includes:
- a set of presence detectors 200, 200', which can be integrated in the wall-mounted monitors 100, also distributed around different rooms in the house; and
- a set of local environmental sensors 201, 202, 201', 202', e.g., door, inundation, temperature... installed in several places around the house.

These presence detectors can be any of the following: motion detectors, 200' like the classical infrared detectors, but also camera-based motion detectors, sound detectors, passive infra-red detectors that detect body heat, RFID readers that detect a RFID pin worn by a person...

All these sensors are also connected to the network, either directly or indirectly by means of the I/O ports of the closest display device.

These display devices are programmed to execute infodgets, to capture information from sensors on the I/O ports or by means of the network, to compute a *presence probability estimate* in a neighbour area, to exchange with other display devices sensor states, software applications (infodgets), *presence probability estimates*, and in general, any type of data, to send commands to other devices and to execute commands received from other devices.

Some examples of expressions for the *presence probability estimate*:
* (presenceDetector1) = 1

In this example, "presenceDetector1" is a binary sensor, such as an infrared active detector. [In this syntax used, the parentheses indicate a variable (state of the detector)]. In this case the *presence probability estimate* is binary, 1 or 0.
* ((presenceDetector1) + (presenceDetector2))/2

In this case there are two binary presence detectors, and the *presence probability estimate* is an average of the two detectors, and so it can take the following values: 0, ½ or 1.
* (motionLevel) >= 0.5 OR (noiseLevel) >= 0.2

In this case there are two analogue detectors which measure the levels of movement and of noise, but the *presence probability estimate* is binary, either 0 or 1.

The display devices (infospaces) of the system can have the following functionalities:
i) continuously monitor the local environment sensors and the presence detection sensors and compute the *presence probability estimate,* the *activation* condition and satisfaction *condition* of a set of applications;
ii) transmit information about the environment and about the applications (infodgets) that are currently active to the other devices via the network;
iii) launch applications when the local environment fulfils determined conditions (see below);
iv) display the message of the active application on its display at different locations, according to the commands sent by the applications themselves;
v) transfer applications to other devices according to the commands sent by the applications and/or the location of the messages on the monitor (e.g., when they reached a transfer zone);
vi) launch applications in response to the transfer commands sent by other display devices;
vii) maintain a copy of applications that can be activated at any moment in response to determined conditions in the environment;
viii) maintain a local copy of inactive applications (called cemetery) used to speed up the transfers, by using the local copy instead of transferring again the whole application;
ix) store statistics and event information with a time stamp (instant of occurrence) until they are sent to the network server;
x) execute the commands sent by the network server (e.g., for tests or for ending the execution of given infodgets);
xi) periodically send statistics and event information to the network server in charge of collecting them.

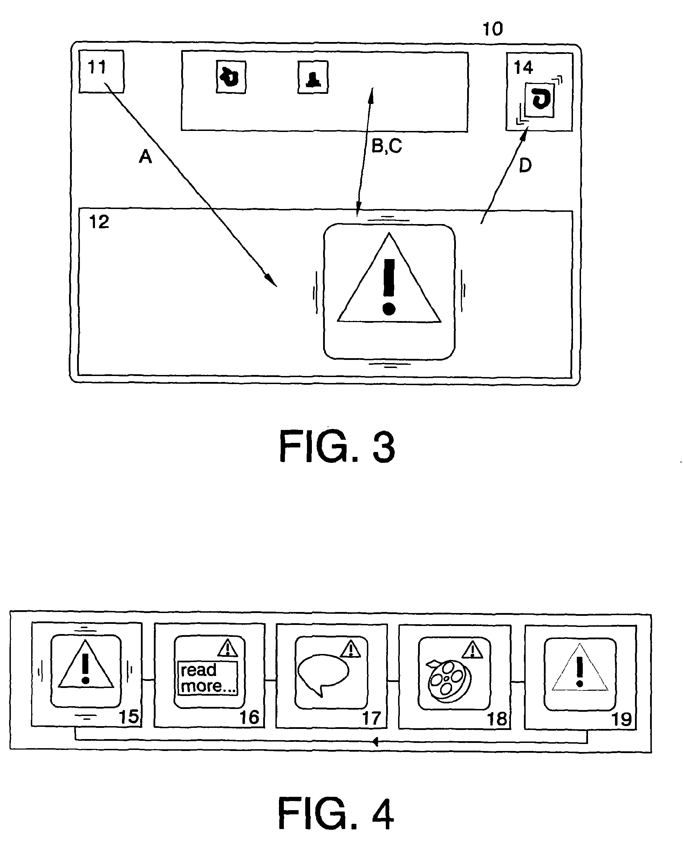

Figure 3 shows a typical layout of the display or screen 10 of a display device. It has four areas or zones: a start zone 11, a stage zone 12 (to display a message), a backstage 13 (when the infodget has no message to display) and a transfer zone 14 (when the infodget requires transfer to another display device). The typical path of a message in a display is the following: from the start zone 11 to the stage zone 12, where the size of the message is increased (shown by arrow A). Then when the message is acknowledged, for example, by interaction of the target-user 1, the message goes from the stage zone 12 to the backstage 13, where the size is again decreased (shown by arrow B). When the message is reactivated due to some reason, the message is transferred from the backstage to the stage zone (shown by arrow C). And finally, when the current display device is no longer adequate, for example, because no movement is detected in the room where such display device is, the message is moved from the stage to transfer zone 14, where again its size is decreased (arrow D).

The local network is composed of a network server (leftmost wall-mounted monitor 100 in figure 2) and connections placed in each display device (infospace). The local network is used to:
- transmit the state of the environment of each infospace to the others (transmission in broadcast mode);
- transfer applications (infodgets) from one infospace to other infospaces;
- collect information on traffic (event log);
- send commands to the infospaces in order to display and/or hide messages;
- send sequences of commands to the infospaces in order to control them externally or to test the response to a series of changes in the environment (test and simulation functions).

The network is also used to collect information from wireless sensors, and if applicable, it is also used to send commands to actuators.

The network server is in charge of:
i) establishing communication with all the infospaces of the system, i.e., assigning them an identifier (typically an IP address), initializing the connection (server side), checking the status of the connected devices;
ii) transmit the states of the environments;
iii) transfer infodgets;
iv) send sequence of commands to the infospaces;
v) maintain history of events and failures;
vi) maintain statistics on traffic and actions of the user, so that it is possible to analyze both the behaviour of the system and the behaviour of the user, for instance, for automatic detection of abnormal user behaviour.

Once the system and its elements have been described, let us consider *some* examples of *events taking place* in the system.

For instance, suppose that the entry door (not shown) of the house where the user resides has an 'entryDoor' sensor 200 monitored by wall-mounted monitor 100, an external light sensor 'LS' placed outside the entry door (not shown) and that the wall-mounted monitor 100 contains a software application stored in its memory named Entry Door' 'ED'.

In this case, a possible expression for the *activation condition* is the following: (entryDoor) >= 0.5, implying that the message is activated when the entry door is open.
Or the activation condition can be also expressed as follows: (entryDoor) >= 0.5 and (LS_level) < 0.1, wherein the message is activated when the entry door is open and there are no lights outside, i.e., by night.

So let's suppose an ever more specific case of the latter, wherein the *activation condition* of ED becomes True when:
i) 'entry Door sensor 200 is ON,
ii) light sensor 'LS' is below a pre-established threshold (there is no light outside the entry door in the entry room, which only can happen at night), and also iii) the duration of activation of ED is shorter than some predefined threshold (time out, in case the user 1 does not acknowledge the message through the interaction means of the display device).

Suppose that the *satisfaction condition* for ED is that the *presence probability estimate* of the current display device (in this case wall-mounted monitor 100) is above a predetermined threshold, as determined from the state of the presence detection sensors of said device, e.g., light sensors, motion sensors, noise detectors passive infrared detectors. In this case, the *satisfaction condition* can be expressed as follows: (presence_probability_estimate)>= 0.5, showing a simple case of *satisfaction condition*: the display device is valid for displaying a message if presence is detected. The *satisfaction condition* is binary.

Another possible expression for the *satisfaction condition* is as follows:
((presence_Probability_estimate) >= 0.5) + 0.5 * ((infospaces) = "kitchen")

In this case the *satisfaction condition* is higher for the display device that is in the kitchen. ["(infospace)" stands for the identifier of the current display device]. This satisfaction *condition* takes the following values: 1.5 (kitchen, somebody here); 1 (elsewhere, somebody here), 0.5 (kitchen, nobody) and 0 (elsewhere, nobody).

It is also possible to express the satisfaction condition as follows: (presence_Probability_estimate)>= 0.5 AND (displayDurationSeconds) < 30. In this example, if nobody acknowledges the message for 30 seconds, the *satisfaction* condition becomes 0 and the message starts travelling across the other displays, even if there is somebody (some presence has been detected around the current display device). (displayDurationSeconds) is a time-related variable. Other time related variables are (hour), (date), etc.

Back to the specific example, wall-mounted monitor 100 is permanently polling 'door open' sensor 200 and light sensor 'LS', determining its *presence* p*robability estimate*, and polling the *activation condition* of application ED.

As soon as the entry door is open ('entryDoor sensor 200 is ON), and there is no light outside (light sensor 'LS' below its pre-established threshold), the activation condition of ED becomes True, and wall-mounted monitor 100 launches application ED.

Then, wall-mounted monitor 100 periodically executes application ED, in alternation with other active applications and with its main loop: sensor polling, network polling, evaluation of activation conditions, etc...

Application ED, when executed periodically, determines its own position on the monitor and displays its associated message. This message moves from the start zone to the stage zone, where it is displayed in full size. Meanwhile, ED may produce alert signals (e.g., sounds) if wall-mounted monitor 100 is configured in this way.

Meanwhile, in its main loop, wall-mounted monitor 100 evaluates the *satisfaction condition* of ED, i.e., if there is presence detected by the current display device, which is wall-mounted monitor 100.

When the *satisfaction condition* of ED is below some threshold, wall-mounted monitor 100 examines the *satisfaction condition* for all the other display devices: wall-mounted monitors 100' in the contiguous room, a personal computer 101, equipped TV-set 102, mobile device 103 and "electronic post-it" 104 in the case shown in figure 2. Wall-mounted monitor 100 has this information related to the satisfaction condition for the other display devices, since the display devices of the system are constantly broadcasting their satisfaction condition, the values of the sensors that they monitor, including their presence sensors, and a copy is locally stored to have access to that information.

Wall-mounted monitor 100 detects that the *satisfaction condition* of application ED, for the wall-mounted monitor 100' (in the contiguous room) is over the pre-established threshold, since motion sensor 200' has detected movement in that room: as shown in figure 2, target user 1 is actually in the room where wall-mounted monitor 100' is. Then, wall-mounted monitor 100 transfers active application ED to wall-mounted monitor 100' in the next room.

Wall-mounted monitor 100' now monitors application ED (*activation condition* and *satisfaction condition*) on the basis of the information of 'entryDoor sensor 200 and of light sensor 'LS' transmitted by wall-mounted monitor 100. ED displays its message, e.g. 'shut main door', on the display of wall-mounted monitor 100', which the target-user can actually see.

The message of ED remains displayed (wherever it is, in the display of wall-mounted monitor 100') until any of the following occurs:
a) User 1 acknowledges the message by means of an interaction with ED.
b) ED has been displayed for the duration determined by its activation condition (time out without any interaction from the user).
c) The user closes the entry door -either directly or by means of some actuator which can be remotely activated to shut the door- thus the activation condition of ED becomes False.

In any of the above cases a), b) or c), ED is considered inactive. The message of ED moves towards the backstage zone where it remains visible (with small size and grey tones).

While in the backstage, the message of ED can be displayed again in full size by means of an interaction from the user. As soon as the interaction ceases, the message returns to the backstage.

The message of ED remains in the backstage until it is pushed out of the monitor by some newer message that requires its place in the backstage. At this moment, application ED effectively ends.

Simultaneously, as soon as ED is considered inactive, wall-mounted monitor 100 broadcasts a command that cause ED to become inactive so that the message of ED is processed in the same way in any display device where it may have been visible.

Now, let us suppose that mobile device 103 contains an application Pills 'P' in charge of reminding the user to take his/her pills at determined hour, e.g., 8:00 AM (clock-based event).

In this case, the *activation condition* of P is True when:
i) the hour of day is 8:00, and
ii) the duration of activation of P is shorter than some threshold (time out, in case the user does not acknowledge the message).

Mobile device 103 permanently polls the activation condition of application P, and at 8:00 AM, P is launched.

The lifecycle of P is similar to that of the application ED of the former example, except that P ends only in two ways, i.e., the user acknowledges the message or the 'time out' defined in the activation condition of P is exceeded.

Considering another possible case, let us suppose that the personal computer 101 (used as a display device) also runs in parallel an application that gets daily weather reports from internet in text format and detects the presence of keyword "rain" (external event). This application interacts with the display software by emulating a rain sensor 'RS', e.g., by writing the probability of rain in a file that is constantly monitored in the display of the personal computer and read in case of modification.

On this personal computer, there is an application called Rain 'R' that displays a message (e.g., it will be raining today, don't forget your umbrella). The activation condition of R is true when:
i) RS is above some threshold,
ii) the duration of activation of P is shorter than some threshold (time out, in case the user does not acknowledge the message), and
iii) the last time application R was activated is the previous day (so that the message is displayed at most once per day).

The weather application continuously enters the probability of rain, the personal computer continuously monitors RS, and whenever the probability of rain is above the specific threshold, the message of R is displayed.

The lifecycle of R is similar to that of the application P of the former example, except that R can at most be displayed once a day.

As indicated before (figure 3), a message is born in the start zone of the display, and its software application (infodget) continuously determines its target. i.e., a location on the display that depends on its internal state: message to be displayed, transfer to another infospace required, no message to display.

The size of the windows that present the messages is automatically determined by the infospace. The infospace may change the size of the window according to its location on the display. The images and animation that compose a message are resized accordingly. For instance, messages may get larger when they are close to the stage zone, and smaller when they are close to the backstage. This increases the readability of active infodgets and allows to maintain more infodgets visible at the same time.

Infodgets move their messages towards the target location in the display by means of a pseudo-random algorithm. The infodget examines periodically a series of possible moves, typically of a few pixels, and determines the best one according to predefined evaluation functions and to a random decision biased towards the locations that have the highest evaluation functions, for instance, an algorithm based on the Boltzmann's probability distribution (Mac Keown, K. P. "Stochastic Simulation in Physics". Springer, 1997). The positions where there would be collision, i.e., an overlap between the infodget and other infodgets or graphical components, are not considered.

Infospaces periodically evaluate the *satisfaction condition* of their infodgets. This expression returns a value that may change according to the state of the sensors monitored by the infospace, including its presence detectors, to timing information and to current infospace. For instance (and as shown in the previous examples), said *satisfaction condition* has a low value when no presence is detected by the infospace, and for specific infodgets related to kitchen devices, a higher value to the satisfaction condition is given for an infospace placed in the kitchen, than for an infospace placed in a bedroom. When the *satisfaction condition* is below some specific or predetermined threshold for some infodget, the infospace evaluates the *satisfaction condition* of this infodget for other infospaces, on the basis of the information transmitted by said infospaces. When the *satisfaction condition* is sufficiently high (above another threshold) in another infospace, the infospace changes the internal state of the infodget to request a transfer, and the infodget moves towards the transfer zone and waits.

Infospaces periodically examine their active applications (infodgets) and transfer to other infospaces those that are in determined locations of the monitor (e.g., the transfer zone). The transfer of an infodget requires a complete communication between the source and target infospaces (full handshake). Only when the transfer is successfully completed is the infodget deleted in the source infospace.

When the target infospace has an updated copy of the infodget in its memory means, the transfer only sends a command that will activate the infodget from the local copy (the files that compose the infodget are not transferred). Otherwise the source infospace transfers these files. In this case, the first visible form of the message, static image and/or animation may be transferred first so that it is displayed in the target infospace while the remainder of the infodget is completely transferred.

There may be several copies of the same infodgets within the network, for instance, in case of failure of the transfer mechanism, or in case the same infodget is simultaneously activated in two different infospaces. To handle this situation, the infospaces continuously broadcast the list of their active infodgets, and the server sends a command to end the execution of the redundant copies that are detected.

A certain amount of redundancy may be accepted, i.e., the same infodget may be simultaneously active in different infospaces. These infospaces can be determined for instance as those for which the *satisfaction condition* of the infodget is above some threshold. The execution of all the copies ends when some infospace broadcasts a command to the effect of hiding the infodget.

There may also be undesired copies of the same infodget on different infospaces, for instance, in case of failure of the transfer mechanism. To handle this situation, the infospaces periodically send the list of their active infodgets to the server, the server detects undesired copies by comparing these lists with the commands that were previously sent, and the server sends a command to end the execution of the undesired copies.

Each infospace monitors in real time the *activation condition* of its infodgets, and when the condition becomes false, the state and the target of infodget changes, and the infodget typically goes towards the backstage and remains there. In this state, any collision with another infodget makes the infodget disappear. Any interaction from the user reactivates the infodget and it goes back to the stage (see below).

In the preferred embodiment, there is a single mechanism to interact with an infodget. For instance, this may be done by placing a finger on the infodget on a touch screen. Under the effect of the interaction, the infodget undergoes a cyclic sequence of changes at a relatively slow pace. There is one state for each form of presentation of the information, e.g., animation, static image, written text, spoken text or video. One state is the acknowledged state, in which the infodget stops moving or goes to the backstage.

Figure 4 shows the typical sequence of states of an infodget under the effect of consecutive interactions. From left to right: normal active state 15 (animation or static image), written text mode 16 (the text is displayed if there is no interaction within a delay e.g., 2 s.), spoken text mode 17 (the text is read if there is no interaction within a delay, e.g., 2 s.), video 18 (it starts if there is no interaction within a delay, e.g., 2 s.), and acknowledged 19 (the infodget left in this state goes to the backstage).

The interaction can be done by touching the infodget on a touch screen, with the finger and/or by means of a stylus. Or it can be done remotely, for instance, by means of speech or sound commands. The interaction can also be carried out by means of a key press on a remote control device, or by means of a movement done with the remote control device.

It is also possible to drag the infodgets to desired zones of the display. For instance, an infodget can be dragged to the backstage to minimize its dimension and stop any animation or from the backstage to the stage, in order to display the message again with a large size.

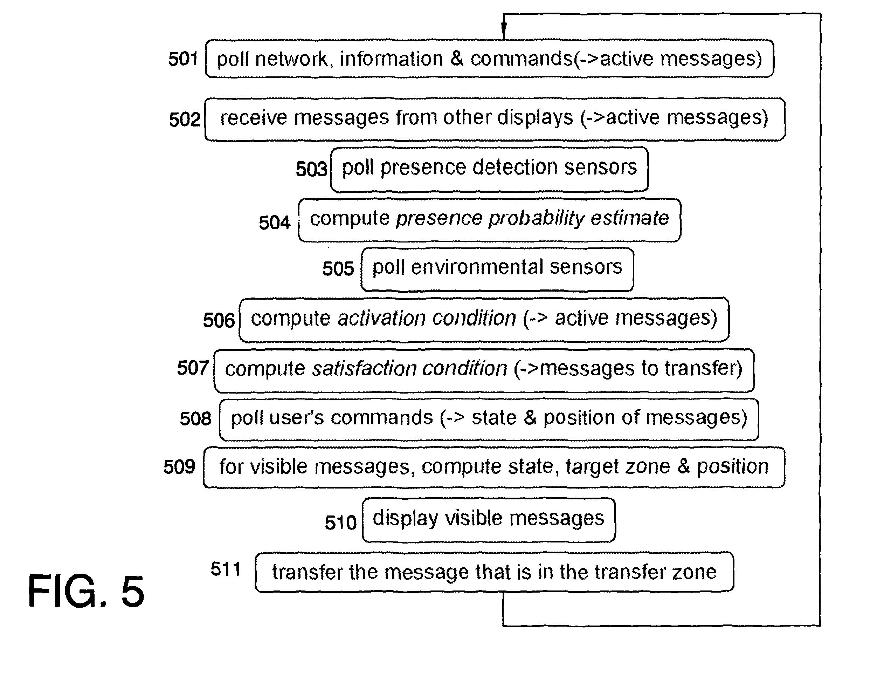

As shown in figure 5, first of, each display device polls the network to which it is connected to get sensor states, presence probability estimates and commands, and determine its active messages (501). Also, other display devices are polled so as to receive messages from said display devices and make those messages received active (502). Also, each display device constantly polls the presence detection sensors to which each display device is connected (503) and with the sensor state provided by such presence detection sensors the *presence probability estimate* is computed (504). Then each display device polls its environmental sensors (505) and the *activation condition* is computed (506) and so is the *satisfaction condition* (507), determining, respectively, the active messages and which messages have to be transferred. According to the user's commands -which are also polled by the display device-, the state and position of each message is determined (508). For those messages that are visible their state is computed and their target zone and position in the display device is determined (509). Then the active messages are displayed (510) and those messages that are in the transfer zone are transferred to other display devices (511). This loop is repeated in each display device on the system.

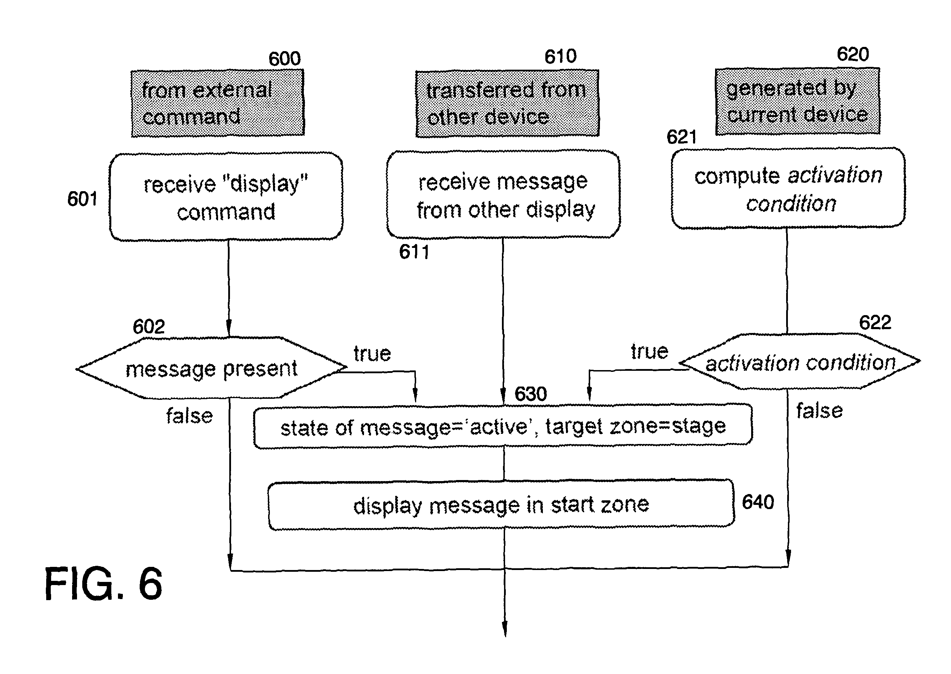

In the flowchart shown in figure 6 the activation of a message is shown. Activation of a message can come from an external command (600) when a command "display" is received from the network (601). It is then verified if there is a message already displayed on the current display device or not (622). Activation can also take place when a message is transferred from another display device (610), and so a message from another monitor is received (611). It is also possible that a message is activated by the current display device (620), and so the *activation condition* is computed (621), and it is checked whether the *activation condition* for that message is valid or not ((622). Then the state of the message becomes 'active' and the target zone for that message becomes the stage zone (630) and the active message is displayed in the start zone of the display device (640).

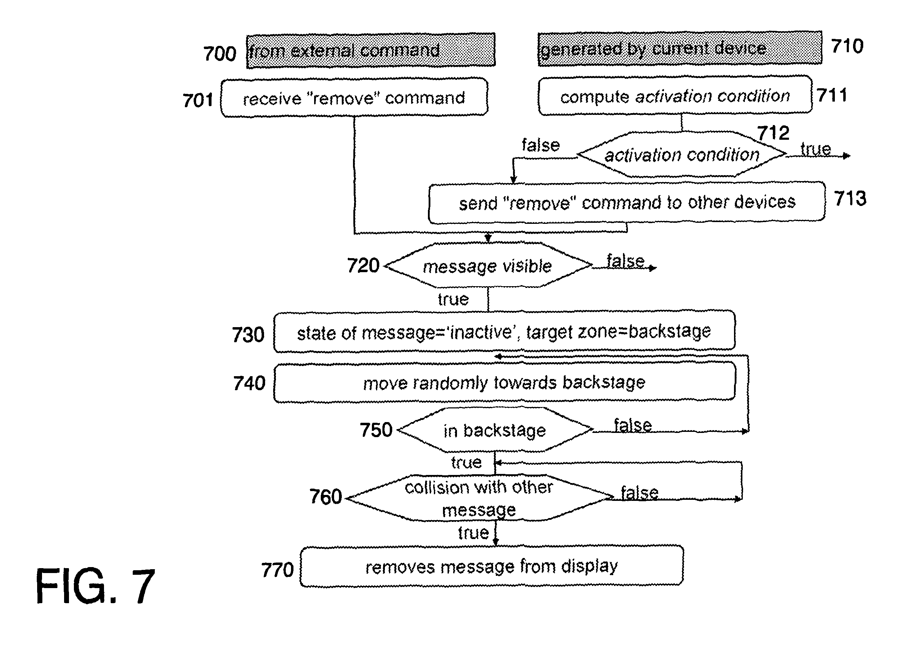

The flowchart of figure 7 shows the termination of a message, either as ended by an external command (700) or by the current display device itself (710). Ending of a message can be the result of a command "remove" received from the network (701), or deactivated by the current display device when the *activation condition* is computed (711), it is checked that the *activation condition* for that message is no longer valid (712), and a "remove" command is sent to the other devices (713). It is then checked if there is a visible message in the current device (720), in which case, the state of the message becomes 'inactive' and the target zone for that message becomes the backstage zone (730) and the active message is randomly moved towards the backstage zone (740) of the display device. It is then checked if the message is in the backstage (750), and in the affirmative, if there is collision with other messages (760). Then, the message is removed from the display device (770).

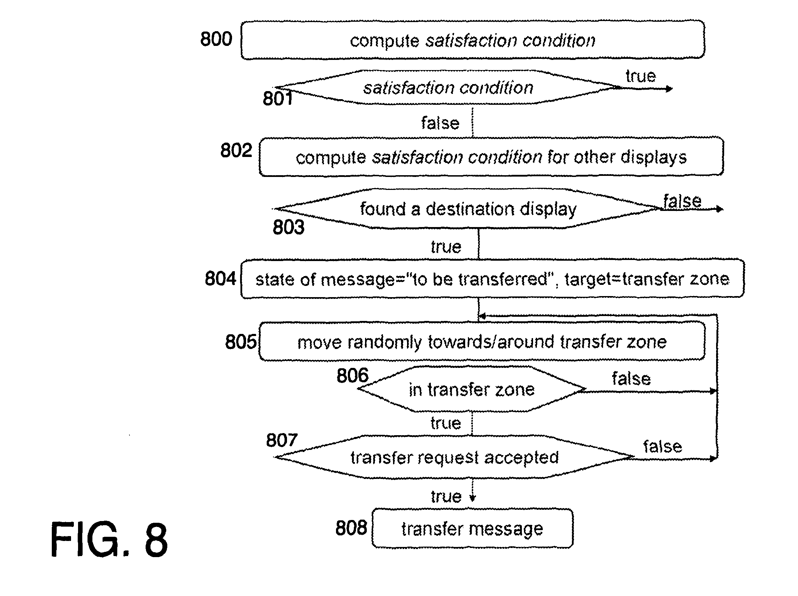

The flowchart of figure 8 shows the transfer of a message, which occurs in the current display device when the *satisfaction condition* is computed (800), and it is checked that the *satisfaction condition* for that message is no longer true (801). It is then computed the *satisfaction condition* for other devices (802). It is then checked if a destination display device is found (803), and in the affirmative the state of the message becomes 'to be transferred' and the target zone for that message becomes the transfer zone (804). The message is randomly moved towards or around the transfer zone of the display device (805). It is then checked if the message is in the transfer zone (806), and in the affirmative, a transfer request is send. In case it is accepted,(807), the message is transferred (808).

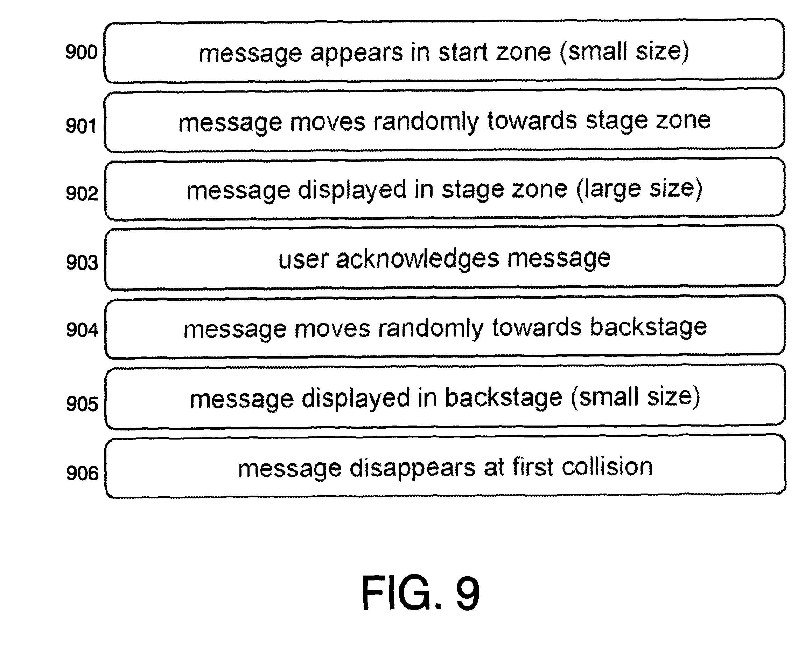

Figure 9 shows the typical movement of a message in a display device when its *satisfaction condition* is over a pre-established threshold. The message appears in the start zone (900) in small size, and it then moves randomly towards the stage zone (901), until the message is displayed in the stage zone in large size (902). Then a user acknowledges the message (903) and the message starts moving randomly towards the backstage (904), where it is displayed in small size (905) and then the message disappears when there is a collision (906).

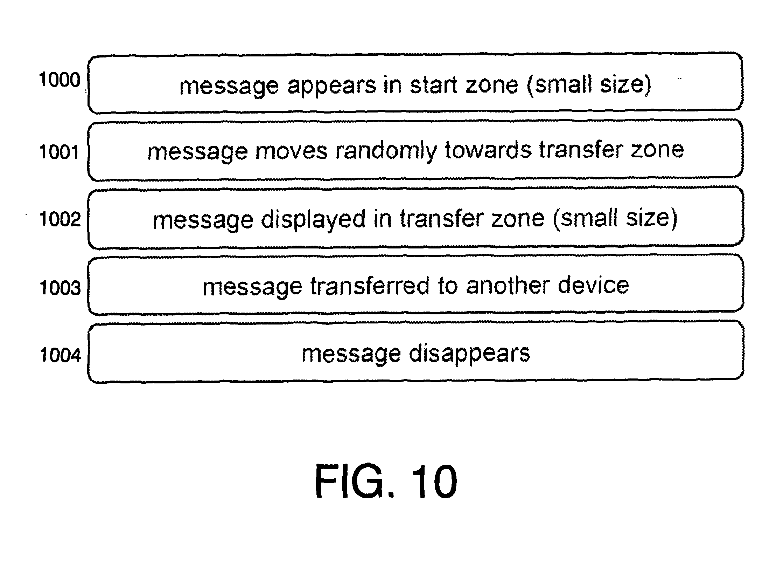

Figure 10 shows the typical movement of a message in a display device when its *satisfaction condition* is over a pre-established threshold, The message appears in the start zone (1000) in small size, and it then moves randomly towards the transfer zone (1001), until the message is displayed in the transfer zone, also in small size (1002). Then the message is transferred to another display device (1003) and then the message disappears (1004).

The system allows to keep track of statistics on the system and the user.

Periodically, infospaces send statistics and history of events to the network server that subsumes them.

These statistics can be used to detect failures in the functioning of the system, to optimize the configuration by detecting for instance the infospaces that are seldom used and replacing them elsewhere, by detecting the most frequent failure.

The system can establish standard patterns of user behaviour, patterns of interaction with the system and/or patterns of activity determined by means of the state of the sensors, i.e., presence in determined rooms at determined times. These patterns are kept local so that there is no violation of privacy.

This way abnormal patterns of behaviour can be detected and an alarm can be sent to a remote monitoring central, so that it is possible to determine (e.g., by means of a phone call) whether the user suffered an accident.

The application of the system of the invention is typically domestic, but the system can also be deployed in an enterprise or a public system, and in general it can be used in any situation where information must be displayed in a way that catches attention and allows fast and easy understanding.

The system is particularly designed for persons that are unfamiliar with -or reluctant to use- technology but it can be useful for anybody, according to the principles of design-for-all.

It is to be understood that the above disclosure is an exemplification of the principles of the invention and does not limit the invention to the illustrated embodiments.

## Claims

1. System for delivering and presenting messages to a user (1) within a network, the system comprising:
- a set of display devices (100, 100', 101, 102, 103) connected to said network, and distributed along different locations within the scope of reach of said network;
- a set of presence detection sensors (200, 200', 201, 201', 202, 202') also connected to such network, directly or through any of said display devices, configured to provide a sensor state which is related to the presence of users within its scope of reach;
- each of the display devices, by means of an internal processor, is configured to periodically sense the sensor states of a subset of said presence detection sensors to which the display device is directly connected or to which it has been assigned monitoring responsibility, and whose scope of reach covers a predetermined neighbour area of said display device;
**characterized in that**:
- each of the display devices is configured to compute a *presence probability estimate* which is obtained as a pre-established function of said sensor states, and whose value covariates with the probability that a user is in said neighbour area of said display device;
- each display device is configured to display zero, one or several messages through means for presenting information (10);
- each message that is to be displayed in the system is presented in at least one display device whose *presence probability estimate* is above a predetermined threshold, through its means for presenting information (10).

2. System according to claim 1, wherein each display device has memory means and is configured to:
- store a variable number of messages in said memory means,
- said messages being received by means of the network or being generated by the display device itself.

3. System according to claim 2, wherein each display device whose presence *probability estimate* is below a predetermined threshold, is configured to transfer any message to be displayed to any display device whose *presence probability estimate* is above a determined threshold by means of the network.

4. System according to any of claims 1-3, wherein each display device is configured to receive commands by means of said network and display or hide messages in response to said commands.

5. System according to any of claims 1-4, wherein
- one or more display devices have a real time clock,
- said display devices are configured to exchange time related information with other display devices
- the display devices are configured to display and/or hide messages according to time-related information proceeding from their real-time clock or received by means of the network.

6. System according to any of claims 1-5, which further comprises a set of local environmental sensors (200, 200', 201, 201', 202, 202') connected to said network, directly or through any of said display devices, wherein:
- said local environmental sensors are distributed among different locations within the scope of reach of such network;
- some display devices are configured to sense the status of a subset of said local environmental sensors composed of those to which they are connected directly and those for which they have been assigned monitoring responsibility through the network;
- said display devices are configured to display and/or hide some messages according to the status of said local environmental sensors.
- said display devices are configured to send commands to other display devices to the effect of displaying and/or hiding messages.

7. System according to claim 6, wherein each of the display devices has one or more applications stored in said memory means, each application including at least:
- one message to be presented to the user,
- an *activation condition* which is a digital sequence that can be computed to produce a value that depends on the status of a first predetermined subset of said local environmental sensors and on time-related information;
- a *satisfaction condition* which is a digital sequence that can be computed to produce a value that depends on said display device, on the *presence probability estimate* of said display device, and on time-related information;
and wherein each of the display devices is configured:
- to constantly monitor said one or more applications stored in its memory; and
- in response to learning that the *activation condition* of any application is true, the display device is configured to launch said application making the corresponding application active; and
- to constantly monitor the arrival of an external command that requires a specific application, and upon detection of such an event, launch the application indicated by the event making it active; and
- to constantly broadcast a list of its active applications to other display devices in the network; and
- in response to having one or more applications active, the display device is configured to evaluate the *satisfaction condition* of each active application, and:
- if it the value of the satisfaction condition is over a pre-established threshold, the display device is configured to present the message of the active application to the user through its means for presenting information; and,
- if it the value of the *satisfaction condition* is below a pre-established threshold, the display device is configured to check the satisfaction condition of the application on the other display devices as broadcasted by them, and to transfer said active application to one or several display devices having the application whose *satisfaction condition* has a value over said pre-established threshold; and
- upon receipt of said active application, said display device having the application whose *satisfaction condition* has a value over said pre-established threshold is configured to present said active message to the user through its means for presenting information.

8. System according to any of claims 1-7, wherein said messages are displayed in a window which is configured to move in the means of presenting information (10) of the display device without altering the proportions and orientation of the message.

9. System according to claim 8, wherein the position of said window is determined by means of a random decision algorithm which is executed periodically and configured to determine randomly a new position *np* for said window each time it is executed, to compute a probability decision function *P* of moving towards *np* and to decide randomly to move to position *np* with said probability decision function *P* or to remain in the current position *cp* with a probability *1-P*, where the probability decision function *P* depends on one or several of the following factors: the amplitude and direction of the movement required to pass from the current position *cp* to the new position *np*, the K1 most recent positions of the window, the K2 most recent directions of movement of the window, the K3 most recent distances between the window and a target position *tp* to display its message, the time during which the window has been visible, and the position of other windows, K1, K2 and K3 being natural numbers.

10. System according to claim 8, wherein the position of said window is determined by means of a random decision algorithm which is executed periodically determining a new position *np* for said message each time it is executed, as follows:
- determine a new position *np*, randomly within a neighborhood *N* of the current position *cp* of the message and decide randomly to move to *np* according to the probability decision function *P* or to remain at position cp with probability *1-P*, the probability decision function *P* being a real function in the interval [0, 1] defined on neighborhood *N*
- where said neighborhood *N* is composed of the positions that are at a distance of at most *D* pixels from the current position *cp*, *D* being an adjustable parameter; and -
- said probability decision function *P* being higher for positions that are closer from a given target position *tp* than the current position *cp* and lower for positions that are farther from *tp* than *cp*, said target position *tp* being a parameter that can be changed at every moment.
- said probability decision function P being higher for positions that do not belong to the list of the K1 most recent positions of the window and lower for positions that belong to said list
- said probability decision function P being higher for positions that are in a the average direction computed from the K2 most recent directions and lower for positions that are in the opposite of said average direction,
Said probability decision function *P* is based on Boltzmann's probability distribution, and
- *P*(*x*) is 1 for positions of x that are closer than said current position *cp* from said target position *t*p, and
- *P*(*x*) = a*exp(-Δ*ElkT*), where Δ*E* is a cost function and *a*, and *k* are arbitrary non-negative constants adjusted so that *P* is normalized within a predetermined interval of values on said neighborhood *N*, and
- Δ*E* increases with the variation of distance to the target position d(*cp*,*tp*)-d(*cp,tp*) where d(x,y) is the distance between two points x and y of the display device, and
- Δ*E* increases when *np* belongs to the list of the *K1* most recent positions, and
- Δ*E* increases with the change of direction |Φ(cp, np)- Φave| that would correspond to the move to new position np, where Φ(x,y) is the direction of the movement between points x and y of the display devices and Φave is the average of the K2 most recent directions and
- *T* is an adjustable parameter which is preferably a function of, among others, the K3 most recent distances between the current position cp and the target position *tp*, the time during which the window has been visible and the distance between cp and the other messages currently displayed by said display device,

11. System according to any of claims 1-10, wherein the means of presenting information (10) of the display device has a number of pre-assigned zones (11, 12, 13, 14) where the message can be displayed, and wherein
the target position tp is at any moment one of the pre-assigned zones (11- 12- 13-14).

12. System according to claim 11, wherein said window has a different dimension according to the current distance to said pre-assigned zones calculated as follows:
- each of said pre-assigned zones is associated to a predetermined scaling factor,
- a compound scaling factor is defined for each position as a weighted sum of said predetermined scaling factors, where the weights are decreasing functions of the distance between said position and the corresponding pre-assigned zone,
- the current size of said window is determined by multiplying its original size by said compound scaling factor at its current position.

13. System according to any of claims 1-12, wherein a displayed message has a status that depends, among others, on the *presence probability estimate* of said display device and whether said message has been acknowledged or not by a user.

14. System according to claim any of claims 11-13, wherein said pre-assigned zones are at least two of the following:
- a start zone (11), where the message first appears when it is displayed
- a stage zone (12), where the message is displayed while it has not been acknowledged and does not require to be transferred to some other display device;
- a backstage (13), where the message is displayed after it is acknowledged; and
- a transfer zone (14), where the message is displayed when it is to be transferred some other display device.

15. System according to any of claims 1-14, which further includes a network server configured to maintain statistics on traffic and actions of the user, in order to analyze both the behaviour of the system and the behaviour of the user.

## Patentansprüche

1. System zum Zuführen und Darstellen von Nachricht zu/für einem/einen Benutzer (1) innerhalb eines Netzwerks, wobei das System umfasst:
- eine Gruppe von Anzeigevorrichtungen (100, 100', 101, 102, 103), die mit dem Netzwerk verbunden und an verschiedenen Standorten innerhalb der Reichweite des Netzwerks verteilt sind;
- eine Gruppe von Präsenzerfassungs-Sensoren (200, 200', 201, 201', 202, 202'), die ebenfalls direkt oder über beliebige der Anzeigevorrichtungen mit dem Netzwerk verbunden und so konfiguriert sind, dass sie einen Sensor-Status bereitstellen, der sich auf die Präsenz von Benutzern innerhalb seiner Reichweite bezieht;
- jede der Anzeigevorrichtungen so konfiguriert ist, dass sie über einen internen Prozessor periodisch die Sensor-Status einer Teilgruppe der Präsenzerfassungs-Sensoren erfasst, mit denen die Anzeigevorrichtung direkt verbunden ist oder für die ihr Überwachungsverantwortung übertragen worden ist und deren Reichweite einen vorgegebenen Nachbarschaftsbereich der Anzeigevorrichtung abdeckt;
- **dadurch gekennzeichnet, dass**:
- jede der Anzeigevorrichtungen so konfiguriert ist, dass sie einen Präsenzwahrscheinlichkeits-Schätzwert berechnet, der als eine vorbestimmte Funktion der Sensor-Status ermittelt wird und dessen Wert zusammen mit der Wahrscheinlichkeit variiert, dass sich ein Benutzer in dem Nachbarschaftsbereich der Anzeigevorrichtung befindet;
- jede Anzeigevorrichtung so konfiguriert ist, dass sie keine, eine oder mehrere Nachrichten über Einrichtungen zum Darstellen von Informationen (10) anzeigt;
- jede Nachricht, die in dem System angezeigt werden soll, in wenigstens einer Anzeigevorrichtung, deren Präsenzwahrscheinlichkeits-Schätzwert über einem vorgegebenen Schwellenwert liegt, über ihre Einrichtung zum Darstellen von Informationen (10) angezeigt wird.

2. System nach Anspruch 1, wobei jede Anzeigevorrichtung über eine Speichereinrichtung verfügt und so konfiguriert ist, dass sie:
- eine variable Anzahl von Nachrichten in der Speichereinrichtung speichert,
- wobei die Nachrichten über das Netzwerk empfangen oder durch die Anzeigevorrichtung selbst erzeugt werden.

3. System nach Anspruch 2, wobei jede Anzeigevorrichtung, deren Präsenzwahrscheinlichkeits-Schätzwert unter einem vorgegebenen Schwellenwert liegt, so konfiguriert ist, dass sie eine etwaige anzuzeigende Nachricht über das Netzwerk zu jeder beliebigen Anzeigevorrichtung überträgt, deren Präsenzwahrscheinlichkeits-Schätzwert über einem bestimmten Schwellenwert liegt.

4. System nach einem der Ansprüche 1-3, wobei jede Anzeigevorrichtung so konfiguriert ist, dass sie Befehle über das Netzwerk empfängt und in Reaktion auf die Befehle Nachrichten anzeigt oder verbirgt.

5. System nach einem der Ansprüche 1-4, wobei
- eine oder mehrere Anzeigevorrichtung/en über eine Echtzeituhr verfügt/verfügen,
- die Anzeigevorrichtungen so konfiguriert sind, dass sie zeitbezogene Informationen mit anderen Anzeigevorrichtungen austauschen,
- die Anzeigevorrichtungen so konfiguriert sind, dass sie Nachrichten entsprechend zeitbezogenen Informationen, die von ihrer Echtzeituhr herrühren oder über das Netzwerk empfangen werden, anzeigen und/oder verbergen.

6. System nach einem der Ansprüche 1-5, das des Weiteren eine Gruppe lokaler Umgebungssensoren (200, 200', 201, 201', 202, 202') umfasst, die direkt oder über beliebige der Anzeigevorrichtungen mit dem Netzwerk verbunden sind, wobei:
- die lokalen Umgebungssensoren über verschiedene Standorte innerhalb der Reichweite des Netzwerks verteilt sind;
- einige Anzeigevorrichtungen so konfiguriert sind, dass sie den Status einer Teilgruppe der lokalen Umgebungssensoren erfassen, die aus denjenigen, mit denen sie direkt verbunden sind, und denjenigen besteht, für die ihnen über das Netzwerk Überwachungsverantwortung übertragen worden ist;
- die Anzeigevorrichtungen so konfiguriert sind, dass sie entsprechend dem Status der lokalen Umgebungssensoren einige Nachrichten anzeigen und/oder verbergen,
- die Anzeigevorrichtungen so konfiguriert sind, dass sie Befehle zu anderen Anzeigevorrichtungen senden, um Nachrichten anzuzeigen und/oder zu verbergen.

7. System nach Anspruch 6, wobei jede der Anzeigevorrichtungen über eine oder mehrere in der Speichereinrichtung gespeicherte/n Anwendung/en verfügt und jede Anwendung wenigstens enthält:
- eine dem Benutzer darzustellende Nachricht,
- eine Aktivierungs-Bedingung, die eine digitale Sequenz ist, die berechnet werden kann, um einen Wert zu erzeugen, der von dem Status einer ersten vorgegebenen Teilgruppe der lokalen Umgebungssensoren und von zeitbezogenen Informationen abhängt;
- eine Erfüllungs-Bedingung, die eine digitale Sequenz ist, die berechnet werden kann, um einen Wert zu erzeugen, der von der Anzeigevorrichtung, von dem Präsenzwahrscheinlichkeits-Schätzwert der Anzeigevorrichtung und von zeitbezogenen Informationen abhängt;
- und wobei jede der Anzeigevorrichtungen so konfiguriert ist, dass sie:
- die eine oder mehreren Anwendung/en, die in ihrem Speicher gespeichert ist/sind, konstant überwacht, und
- wobei die Anzeigevorrichtung so konfiguriert ist, dass sie in Reaktion darauf, dass sich erweist, dass die Aktivierungs-Bedingung einer beliebigen Anwendung gültig ist, die Anwendung startet und damit die entsprechende Anwendung aktiviert; und
- konstant den Eingang eines externen Befehls überwacht, der eine spezifische Anwendung erfordert, und beim Erfassen eines derartigen Ereignisses die durch das Ereignis angezeigte Anwendung startet und sie damit aktiviert; und
- konstant eine Liste ihrer aktiven Anwendungen zu anderen Anzeigevorrichtungen in dem Netzwerk rundsendet; und
- wobei die Anzeigevorrichtung so konfiguriert ist, dass sie in Reaktion darauf, dass eine oder mehrere Anwendung/en aktiv ist/sind, die Erfüllungs-Bedingung jeder aktiven Anwendung bewertet, und:
- die Anzeigevorrichtung so konfiguriert ist, dass sie, wenn der Wert der Erfüllungs-Bedingung über einem vorbestimmten Schwellenwert liegt, die Nachricht der aktiven Anwendung dem Benutzer über ihre Einrichtung zum Darstellen von Informationen darstellt; und
- die Anzeigevorrichtung so konfiguriert ist, dass sie, wenn der Wert der Erfüllungs-Bedingung unter einem vorbestimmten Schwellenwert liegt, die Erfüllungs-Bedingung der Anwendung auf den anderen Anzeigevorrichtungen, die von ihnen rundgesendet wurde, prüft und die aktive Anwendung zu einer oder mehreren Anzeigevorrichtunglen überträgt, bei der/denen die Erfüllungs-Bedingung der Anwendung einen Wert über dem vorbestimmten Schwellenwert hat; und
- die Anzeigevorrichtung, bei der die Erfüllungs-Bedingung der Anwendung einen Wert über dem vorbestimmten Schwellenwert hat, so konfiguriert ist, dass sie beim Empfang der aktiven Anwendung dem Benutzer die aktive Nachricht über ihre Einrichtung zum Darstellen von Informationen darstellt.

8. System nach einem der Ansprüche 1-7, wobei die Nachrichten in einem Fenster angezeigt werden, das so konfiguriert ist, dass es sich in der Einrichtung zum Darstellen von Informationen (10) der Anzeigevorrichtung bewegt, ohne die Proportionen und die Ausrichtung der Nachricht zu ändern.

9. System nach Anspruch 8, wobei die Position des Fensters mittels eines Zufallsentscheidungs-Algorithmus bestimmt wird, der periodisch ausgeführt wird und so konfiguriert ist, dass er im Zufallsverfahren eine neue Position np für das Fenster bei jeder Ausführung desselben bestimmt, eine Wahrscheinlichkeitsentscheidungs-Funktion P des Bewegens in Richtung von np berechnet und im Zufallsverfahren für Bewegen an Position np mit der Wahrscheinlichkeitsentscheidungs-Funktion P oder für Verbleiben an der aktuellen Position cp mit einer Wahrscheinlichkeit 1-P entscheidet, wobei die Wahrscheinlichkeitsentscheidungs-Funktion P von einem oder mehreren der folgenden Faktoren abhängt:
der Amplitude und Richtung der Bewegung, die erforderlich ist, um von der aktuellen Position cp an die neue Position np zu gelangen, den K1 letzten Positionen des Fensters, den K2 letzten Bewegungsrichtungen des Fensters, den K3 letzten Abstände zwischen dem Fenster und einer Zielposition tp zum Anzeigen seiner Nachricht, der Zeit, während der das Fenster sichtbar gewesen ist, und der Position anderer Fenster, wobei K1 und K2 natürliche Zahlen sind.

10. System nach Anspruch 8, wobei die Position des Fensters über einen Zufallsentscheidungs-Algorithmus bestimmt wird, der periodisch ausgeführt wird und eine neue Position np für die Nachricht bei jeder Ausführung desselben wie folgt bestimmt:
- Bestimmen einer neuen Position np innerhalb einer Nachbarschaft N der aktuellen Position cp der Nachricht im Zufallsverfahren und Entscheiden für Bewegen zu np entsprechend der Wahrscheinlichkeitsentscheidungs-Funktion P oder für Verbleiben an Position cp mit Wahrscheinlichkeit 1-P im Zufallsverfahren, wobei die Wahrscheinlichkeitsentscheidungs-Funktion P eine reale Funktion in dem Intervall [0, 1] ist, das über Nachbarschaft N definiert ist,
- wobei die Nachbarschaft N aus den Positionen besteht, die sich in einem Abstand von maximal D Pixeln zu der aktuellen Position cp befinden, und D ein einstellbarer Parameter ist; und
- die Wahrscheinlichkeitsentscheidungs-Funktion P für Positionen, die näher an einer gegebenen Zielposition tp liegen als die aktuelle Position cp, höher und für Positionen, die weiter von tp entfernt sind als cp, niedriger ist, wobei die Zielposition tp ein Parameter ist, der in jedem Moment geändert werden kann,
- die Wahrscheinlichkeitsentscheidungs-Funktion P für Positionen, die nicht zu der Liste der K1 letzten Positionen gehören, höher und für Positionen, die zu der Liste gehören, niedriger ist,
- die Wahrscheinlichkeitsentscheidungs-Funktion P für Positionen, die in einer Durchschnittsrichtung liegen, die aus den K2 letzten Positionen berechnet wird, höher und für Positionen, die entgegengesetzt zu der Durchschnittsrichtung liegen, niedriger ist,
- die Wahrscheinlichkeitsentscheidungs-Funktion P auf der Boltzmann-Wahrscheinlichkeitsverteilung basiert,
- P(x) für Positionen x, die näher an der Zielposition tp liegen als die aktuelle Position cp, 1 ist, und
- P(x) = a*exp(-ΔElkT), wobei ΔE eine Kostenfunktion ist und a und k beliebige nicht negative Konstanten sind, die so eingestellt sind, dass P innerhalb eines vorgegebenen Intervalls von Werten über die Nachbarschaft N normalisiert wird, und
- ΔE mit der Änderung des Abstandes zu der Zielposition d(cp,tp)- d(cp,tp) zunimmt, wobei d(x,y) der Abstand zwischen zwei Punkten x und y der Anzeigevorrichtung ist, und
- ΔE zunimmt, wenn np zu der Liste der K1 letzten Positionen gehört, und
- ΔE mit der Richtungsänderung |Φ(cp, np) - Φave| zunimmt, die der Bewegung an die neue Position np entsprechen würde, wobei Φ(x,y) die Richtung der Bewegung zwischen den Punkten x und y der Anzeigevorrichtung ist und Φave der Durchschnitt der K2 letzten Richtungen ist, und
- T ein einstellbarer Parameter ist, der vorzugsweise unter anderem eine Funktion der K3 letzten Abstände zwischen der aktuellen Position cp und der Zielposition tp, der Zeit, während der das Fenster sichtbar gewesen ist, und des Abstandes zwischen cp und den anderen Nachrichten ist, die aktuell durch die Anzeigevorrichtung angezeigt werden.

11. System nach einem der Ansprüche 1-10, wobei die Einrichtung zum Darstellen von Informationen (10) der Anzeigevorrichtung eine Anzahl im Voraus zugewiesener Zonen (11, 12, 13, 14) aufweist, in denen die Nachricht angezeigt werden kann, und
die Zielposition tp in jedem Moment eine der im Voraus zugewiesenen Zonen (11, 12, 13, 14) ist.

12. System nach Anspruch 11, wobei das Fenster entsprechend dem aktuellen Abstand zu den im Voraus zugewiesenen Zonen eine andere Dimension hat, die wie folgt berechnet wird:
- jede der im Voraus zugewiesenen Zonen wird mit einem vorgegebenen Skalierfaktor verknüpft,
- ein zusammengesetzter Skalierfaktor wird für jede Position als eine gewichtete Summe der vorgegebenen Skalierfaktoren definiert, wobei die Gewichte abnehmende Funktionen des Abstandes zwischen der Position und der entsprechenden, im Voraus zugewiesenen Zone sind,
- die aktuelle Größe des Fensters bestimmt wird, indem seine ursprüngliche Größe mit dem zusammengesetzten Skalierfaktor an seiner aktuellen Position multipliziert wird.

13. System nach einem der Ansprüche 1-12, wobei eine angezeigte Nachricht einen Status hat, der unter anderem von dem Präsenzwahrscheinlichkeits-Schätzwert der Anzeigevorrichtung und davon abhängt, ob die Nachricht von einem Benutzer bestätigt worden ist oder nicht.

14. System nach einem der Ansprüche 11-13, wobei die im Voraus zugewiesenen Zonen wenigstens zwei der folgenden sind:
- eine Start-Zone (11), in der die Nachricht zuerst erscheint, wenn sie angezeigt wird,
- eine Wiedergabe-Zone (11), in der die Nachricht angezeigt wird, während sie nicht bestätigt worden ist und nicht zu einer anderen Anzeigevorrichtung übertragen werden muss;
- ein Hintergrund (13), in dem die Nachricht angezeigt wird, nachdem sie bestätigt ist; und
- eine Übertragungs-Zone (14), in der die Nachricht angezeigt wird, wenn sie zu einer anderen Anzeigevorrichtung übertragen werden soll.

15. System nach einem der Ansprüche 1-14, das des Weiteren einen Netzwerk-Server enthält, der so konfiguriert ist, dass er Statistiken über Verkehr und Aktionen des Benutzers führt, um sowohl das Verhalten des Systems als auch das Verhalten des Benutzers zu analysieren.

## Revendications

1. Système de distribution et de présentation de messages à un utilisateur (1) à l'intérieur d'un réseau, le système comprenant :
- un ensemble de dispositifs d'affichage (100, 100', 101, 102, 103) connectés audit réseau, et distribués sur différents emplacements au sein de la portée dudit réseau ;
- un ensemble de capteurs de détection de présence (200, 200', 201, 201', 202, 202') également connectés audit réseau, directement ou par le biais de n'importe quels desdits dispositifs d'affichage, configurés pour fournir un état de capteur qui est relatif à la présence d'utilisateurs au sein de sa portée ;
- chacun des dispositifs d'affichage, au moyen d'un processeur interne, est configuré pour détecter périodiquement les états de capteurs d'un sous-ensemble desdits capteurs de détection de présence auquel le dispositif d'affichage est directement connecté ou auquel il a été attribué une responsabilité de surveillance, et dont la portée couvre une zone voisine prédéterminée dudit dispositif d'affichage ;
**caractérisé en ce que**
- chacun des dispositifs d'affichage est configuré pour calculer une estimation de probabilité de présence qui est obtenue en tant qu'une fonction préétablie desdits états de capteurs, et dont la valeur varie conjointement avec la probabilité pour qu'un utilisateur se trouve dans ladite zone voisine dudit dispositif d'affichage ;
- chaque dispositif d'affichage est configuré pour afficher zéro, un ou plusieurs messages par le biais de moyens de présentation d'informations (10) ;
- chaque message qui doit être affiché dans le système est présenté sur au moins un dispositif d'affichage dont l'estimation de probabilité de présence est au-dessus d'un seuil prédéterminé, par le biais de ses moyens de présentation d'informations (10).

2. Système selon la revendication 1, dans lequel chaque dispositif d'affichage présente des moyens de mémorisation et est configuré pour :
- stocker un nombre variable de messages dans lesdits moyens de mémorisation,
- lesdits messages étant reçus au moyen du réseau ou étant générés par le dispositif d'affichage lui-même.

3. Système selon la revendication 2, dans lequel chaque dispositif d'affichage dont l'estimation de probabilité de présence est en deçà d'un seuil prédéterminé, est configuré pour transférer n'importe quel message devant être affiché à n'importe quel dispositif d'affichage dont l'estimation de probabilité de présence est au-dessus d'un seuil déterminé au moyen du réseau.

4. Système selon l'une quelconque des revendications 1 à 3, dans lequel chaque dispositif d'affichage est configuré pour recevoir des commandes au moyen dudit réseau et pour afficher ou cacher des messages en réponse auxdites commandes.

5. Système selon l'une quelconque des revendications 1 à 4, dans lequel
- un ou plusieurs dispositifs d'affichage présentent une horloge en temps réel,
- lesdits dispositifs d'affichage sont configurés pour échanger des informations temporelles avec d'autres dispositifs d'affichage,
- les dispositifs d'affichage sont configurés pour afficher et/ou cacher les messages selon des informations temporelles provenant de leur horloge en temps réel ou reçues au moyen du réseau.

6. Système selon l'une quelconque des revendications 1 à 5, comprenant en outre un ensemble de capteurs environnementaux locaux (200, 200', 201, 201', 202, 202') connectés audit réseau, directement ou par le biais de n'importe lequel desdits dispositifs d'affichage, dans lequel :
- lesdits capteurs environnementaux locaux sont distribués entre différents emplacements au sein de la portée dudit réseau ;
- certains dispositifs d'affichage sont configurés pour détecter l'état d'un sous-ensemble desdits capteurs environnementaux locaux composé de ceux auxquels ils sont connectés directement et de ceux pour lesquels ils se sont vus attribuer la responsabilité de surveillance par le biais du réseau ;
- lesdits dispositifs d'affichage sont configurés pour afficher et/ou cacher certains messages selon l'état de leurs capteurs environnementaux locaux ;
- lesdits dispositifs d'affichage sont configurés pour envoyer des commandes aux autres dispositifs d'affichage en vue d'afficher et/ou de cacher des messages.

7. Système selon la revendication 6, dans lequel chacun des dispositifs d'affichage présente une ou plusieurs applications stockées dans lesdits moyens de mémorisation, chaque application comprenant au moins :
- un message devant être présenté à l'utilisateur,
- une condition d'activation qui est une séquence numérique qui peut être calculée pour produire une valeur qui dépend de l'état d'un premier sous-ensemble prédéterminé desdits capteurs environnementaux locaux et des informations temporelles ;
- une condition de satisfaction qui est une séquence numérique qui peut être calculée pour produire une valeur qui dépend dudit dispositif d'affichage, de l'estimation de probabilité de présence dudit dispositif d'affichage, et des informations temporelles ;
et dans lequel chacun des dispositifs d'affichage est configuré :
- pour surveiller de façon constante lesdites une ou plusieurs applications stockées dans sa mémoire ; et
- en réponse à la connaissance du fait que la condition d'activation de n'importe quelle application est vraie, le dispositif d'affichage est configuré pour lancer ladite application, rendant l'application correspondante active ; et
- pour surveiller de façon constante l'arrivée d'une commande externe qui requiert une application spécifique, et lors de la détection d'un tel événement, lancer l'application indiquée par l'événement, la rendant active ; et
- pour diffuser de façon constante une liste de ses applications actives vers d'autres dispositifs d'affichage dans le réseau ; et
- en réponse au fait qu'une ou plusieurs applications sont actives, le dispositif d'affichage est configuré pour évaluer la condition de satisfaction de chaque application active, et ;
- si la valeur de la condition de satisfaction est au-dessus d'un seuil préétabli, le dispositif d'affichage est configuré pour présenter le message de l'application active à l'utilisateur par le biais de ses moyens de présentation d'informations ;
- si la valeur de la condition de satisfaction est en deçà d'un seuil préétabli, le dispositif d'affichage est configuré pour vérifier la condition de satisfaction de l'application sur les autres dispositifs d'affichage telle que diffusée par eux, et pour transférer ladite application active à un ou plusieurs dispositifs d'affichage ayant l'application dont la condition de satisfaction a une valeur dépassant ledit seuil préétabli ; et
- lors de la réception de ladite application active, ledit dispositif d'affichage ayant l'application dont la condition de satisfaction a une valeur dépassant ledit seuil préétabli est configuré pour présenter ledit message actif à l'utilisateur par le biais de ses moyens de présentation d'informations.

8. Système selon l'une quelconque des revendications 1 à 7, dans lequel lesdits messages sont affichés dans une fenêtre qui est configurée pour se déplacer dans les moyens de présentation d'informations (10) du dispositif d'affichage sans altérer les proportions et l'orientation du message.

9. Système selon la revendication 8, dans lequel la position de ladite fenêtre est déterminée au moyen d'un algorithme de décision aléatoire qui est exécuté périodiquement et configuré pour déterminer de façon aléatoire une nouvelle position np pour ladite fenêtre chaque fois qu'il est exécuté, pour calculer une fonction de décision de probabilité P de déplacement vers np et pour décider de façon aléatoire de passer à la position np avec ladite fonction de décision de probabilité P ou de rester dans la position actuelle cp avec une probabilité 1-P, où la fonction de décision de probabilité P dépend d'un ou plusieurs facteurs parmi les facteurs suivants : l'amplitude et la direction du mouvement requis pour passer de la position actuelle cp à la nouvelle position np, les K1 positions les plus récentes de la fenêtre, les K2 directions les plus récentes de mouvement de la fenêtre, les K3 distances les plus récentes entre la fenêtre et une position cible tp pour afficher son message, le temps pendant lequel la fenêtre a été visible, et la position des autres fenêtres, K1, K2 et K3 étant des nombres naturels.

10. Système selon la revendication 8, dans lequel la position de ladite fenêtre est déterminée au moyen d'un algorithme de décision aléatoire qui est exécuté périodiquement déterminant une nouvelle position np pour ledit message chaque fois qu'il est exécuté, comme suit :
- déterminer une nouvelle position np, de façon aléatoire à l'intérieur d'un N de proximité de la position actuelle cp du message et décider de façon aléatoire de passer à np selon la fonction de décision de probabilité P ou de rester à la position cp avec la probabilité 1-P, la fonction de décision de probabilité P étant une fonction réelle dans l'intervalle [0, 1] défini sur le N de proximité
- où ledit N voisin est composé des positions qui sont à une distance d'au plus D pixels de la position actuelle cp, D étant un paramètre ajustable ; et
- ladite fonction de décision de probabilité P étant supérieure pour les positions qui sont plus proches d'une position cible donnée tp que la position actuelle cp et inférieure pour les positions qui sont plus éloignées de tp que cp, ladite position cible tp étant un paramètre qui peut être changé à tout moment ;
- ladite fonction de décision de probabilité P étant supérieure pour les positions qui n'appartiennent pas à la liste des K1 positions les plus récentes de la fenêtre et inférieure pour les positions qui appartiennent à ladite liste ;
- ladite fonction de décision de probabilité P étant supérieure pour les positions qui sont dans la direction moyenne calculée par rapport aux K2 directions les plus récentes et inférieure pour les positions qui sont dans la direction opposée de ladite direction moyenne,
ladite fonction de décision de probabilité P est basée sur la distribution de probabilité de Boltzmann, et
- P(x) est 1 pour les positions de x qui sont plus proches que ladite position actuelle cp de ladite position cible tp, et
- P(x) = a*exp(-ΔEIlkT), où ΔE est une fonction de coût et a et k sont des constantes non négatives arbitraires ajustées de telle sorte que P est normalisée à l'intérieur d'un intervalle prédéterminé de valeurs sur ledit N de proximité, et
- ΔE augmente avec la variation de distance vers la position cible d(cp,tp)-d(cp,tp), où d(x,y) est la distance entre deux points x et y du dispositif d'affichage, et
- ΔE augmente lorsque np appartient à la liste des K1 positions les plus récentes, et
- ΔE augmente avec le changement de direction |Φ(cp, np)-Φave| qui correspondrait au déplacement vers la nouvelle position np, où Φ(x,y) est la direction du mouvement entre les points x et y des dispositifs d'affichage et Φave est la moyenne des k2 directions les plus récentes et
- T est un paramètre ajustable qui est de préférence une fonction, entre autres, des K3 distances les plus récentes entre la position actuelle cp et la position cible tp, du temps pendant lequel la fenêtre a été visible et de la distance entre cp et les autres messages actuellement affichés par ledit dispositif d'affichage.

11. Système selon l'une quelconque des revendications 1 à 10, dans lequel les moyens de présentation d'informations (10) du dispositif d'affichage ont un nombre de zones pré-attribuées (11, 12, 13, 14) où les messages peuvent être affichés, et dans lequel
la position cible tp est à tout moment une des zones pré-attribuées (11, 12, 13, 14).

12. Système selon la revendication 11, dans lequel ladite fenêtre a une dimension différente selon la distance actuelle jusqu'auxdites zones pré-attribuées calculée comme suit :
- chacune desdites zones pré-attribuées est associée à un facteur d'échelle prédéterminé,
- un facteur d'échelle composé est défini pour chaque position comme une somme pondérée desdits facteurs d'échelle prédéterminés, où les poids sont des fonctions décroissantes de la distance entre ladite position et la zone pré-attribuée correspondante,
- la taille actuelle de ladite fenêtre est déterminée en multipliant sa taille originale par ledit facteur d'échelle composé à sa position actuelle.

13. Système selon l'une quelconque des revendications 1 à 12, dans lequel un message affiché a un état qui dépend, entre autres, de l'estimation de probabilité de présence dudit dispositif d'affichage et du fait que la réception dudit message a été ou non accusée par un utilisateur.

14. Système selon l'une quelconque des revendications 11 à 13, dans lequel lesdites zones pré-attribuées sont au moins deux des zones suivantes :
- une zone de départ (11), où le message apparaît en premier lieu lorsqu'il est affiché
- une zone de premier plan (12), où le message est affiché alors qu'il n'a pas fait l'objet d'un accusé de réception et n'a pas besoin d'être transféré à un autre dispositif d'affichage ;
- une zone d'arrière-plan (13), où le message est affiché une fois qu'il a fait l'objet d'un accusé de réception ; et
- une zone de transfert (14), où le message est affiché lorsqu'il doit être transféré à un autre dispositif d'affichage.

15. Système selon l'une quelconque des revendications 1 à 14, qui comprend en outre un serveur de réseau configuré pour conserver des statistiques concernant le trafic et les actions de l'utilisateur, afin d'analyser à la fois le comportement du système et le comportement de l'utilisateur.
